# EUROPEAN PATENT APPLICATION

(11) **EP 3 611 539 A1**
(43) Date of publication of application: **19.02.2020**
(21) Application number: 17729542.5
(22) Date of filing: 10.04.2017
(51) Int. Cl.: G01S 13/87, G01S 13/91, B61B 13/10

(54) **POSITIONING SYSTEM FOR HYPERLOOP TRANSPORTATION**

(71) Applicant: Auto Drive Solutions S.L., 28290 LAS ROZAS-MADRID (ES)
(72) Inventor: BADOLATO MARTIN, Alejandro, 28411 Moralzarzal (Madrid) (ES)
(74) Representative: Urizar Anasagasti, Jesus Maria
(86) International application number: PCT/IB2017/052056
(87) International publication number: WO 2018/189568

(57) **Abstract**

A positioning system for the Hyperloop transportation comprising a set of sensors installed in the pod maping the infrastructure by means of electromagnetic or pressure waves. In the tube through which the sheath runs, there is arranged along the way information encoded by passive elements that form a message that the sensors are able to read.

Once the message is decoded, it is possible to know the longitudinal advancement of the sheath and its rotation with respect to the longitudinal axis of the tube since it presents different information encoded both longitudinally and angularly

## Description

### OBJECT OF THE INVENTION

The preferred invention relates to a positioning system for the hyperloop transportation.

The system uses a set of sensors installed in the pod that map the infrastructure by electromagnetic or pressure waves.

In the tube through which the sheath runs, there is arranged along the way information encoded by passive elements that form a message that the sensors are able to read.

Once the message is decoded, it is possible to know the longitudinal advancement of the sheath and its rotation relative to the longitudinal axis of the tube.

In addition to reading the recorded messages, the sensors are able to determine whether the sheath runs through the center of the tube or, conversely, there is an axial displacement.

### FIELD OF THE INVENTION.

The field of the invention is that of obtaining the positioning of fast transports in both longitudinal and axial displacement lengths.

### BACKGROUND OF THE INVENTION

There is some background on devices that perform a similar function for other means of transport. Among them the inventor is also inventor of the international patent PCT / ES2015 / 070378 where a guideway is described as installed flush with the road sign although it may optionally be concealed under a layer of asphalt treated with a layer of hydrophobic material of preferred dimensions of 1.5 cm of width by 5 cm deep and where inside there are machined cavities, being the preferred form of the hollows the one of dihedrons since the planes of the dihedrates increase the reflected signal facilitating therefore its detection.

The same inventor has also submitted, by means of PCT / IB2016 / 051159, a similar system applicable inter alia to the railway industry.

However, these inventions are not optimal for a transport medium such as hyperloop where both the rotation of the sheath relative to the longitudinal axis of the tube and the axial displacement of the sheath relative to the same longitudinal axis are to be controlled.

On the part of the inventor there is no known prior art incorporating the dispositions presented by the present invention, nor the advantages that this arrangement entails.

### DESCRIPTION OF THE INVENTION

The referred invention relates to a positioning system for the hyperloop transport medium.

The system uses a set of sensors installed in the pod that map the infrastructure by electromagnetic or pressure waves.

In the tube through which the sheath runs, there is arranged along the way information encoded by passive elements that form a message that the sensors are able to read.

Once the message is decoded, it is possible to know the longitudinal advancement of the sheath and its rotation with respect to the longitudinal axis of the tube since it presents different information encoded both longitudinally and angularly.

In addition to reading the recorded messages, the sensors are able to determine whether the sheath runs through the center of the tube or, conversely, if there is an axial displacement.

### PREFERRED EMBODIMENT OF THE INVENTION.

The positioning system for the Hyperloop transport medium consists of a set of radar sensors that map the infrastructure through electromagnetic or pressure waves and measure the different distances up to the dielectric change frontiers or to dielectric metal boundaries to:
- determine the axial displacement of the sheath from the tube
- determine the longitudinal advancement of the sheath along the tube
- determine the rotation of the sheath relative to the longitudinal axis of the tube.

In a particular way, the positioning system consists of four millimeter-wave radar sensors coupled to both sides of the sheath and in the ceiling and ground that concentrate the energy that radiates over a square centimeter of surface of the tube with the help of a lens and measure the distance from the outer shell of the sheath to the inner wall of the tube being able to determine the possible axial displacement.

The inner wall of the tube is lined with a wave-permeable plastic material.

The plastic material has two layers of the same material adhered together with a glue having a different dielectric constant.

This dielectric discontinuity causes a reflection that the radar uses to measure the thickness of the layer closest to the sheath since in the discontinuity between the interior of the tube and the plastic there is also another discontinuity that causes another reflection.

These thicknesses are modified in a staggered way along the longitudinal axis of the tube in sections of 2 cm codifying logical levels.

These logical levels would be the following:
1, 0 bit, start bit, and end bit and bit repeated by thicknesses of the outer layer (closest to the sheath) of 1,2,3,4 and 5 cm respectively.

The repeated bit, used alternately, allows to identify consecutive sequences of equal logical level.

When the sensor measures this thickness, it associates the logic level with that of the previous bit.

The bits of information are grouped in 4 in a single piece.

Since only 4 bits per piece are coded, 16 different pieces are obtained.

The 4 bits of each piece are preceded by a start bit and end with an end bit.

Plastic pieces (toroids obtained by the revolution of a rectangle) combine to form 32-bit words.

A seventeenth model of piece of plastic coded in an analogous way identifies the beginning and end of a word. This piece is characterized in that its first bit after the start bit is a repeated bit.

In addition to longitudinal coding, a second angular coding allows the sensors to identify the rotation of the sheath relative to the longitudinal axis.

The plastic pieces have different angular tracks as shown in Figure XX where each track encodes a different sequence of data.

Two other sets of thickness are used to represent the same logic levels 1.0, Repeat, Start and End.

Thus, a second set encodes the information in the range of thicknesses between 6 and 10 cm and a third set encodes in the range of between 11 and 15 cm.

The consecutive angular tracks alternate the set of logical levels.

For example,
The track corresponding to 0 degrees of rotation uses the set of logical levels 1,
The track corresponding to 1 degree of rotation uses the set of logical levels 2,
The track corresponding to 2 degrees of rotation uses the set of logical levels 3 and
The track corresponding to 3 degrees reuses the set 1.

In this way, when the sensor is pointing between two adjacent tracks the sensor is able to read both tracks without the information of one track interfering with the reading of the other. Each track, in addition to the 4 bits of longitudinal information, contains another 10 bits that identify the track number.

In this way, each of the 16 different pieces contains a set of tracks where each one encodes 16 bits in length: 1 start bit, 4 bit lengthwise, 10 track identification bits and one end bit.

The 4 bits of longitudinal information are interleaved between the bits encoding the track number at known positions.

Having sufficiently described the nature of the invention and the manner in which it is to be practiced, it should be noted that the foregoing provisions and represented in the accompanying drawings are susceptible to modifications of detail insofar as they do not alter the fundamental principles set forth in paragraphs and summarized in the following claims.

## Claims

1. Positioning system for the Hyperloop transportation consisting of a set of radar sensors that map the infrastructure by means of electromagnetic or pressure waves and measure the different distances up to the frontiers of change up to the dielectric metal boundaries **characterized by** being constituted by four millimeter-wave radar sensors coupled to both sides of the sheath and the ceiling and floor that concentrate the energy radiated over a square centimeter of surface of the tube with the aid of a lens and measure the distance from the outer shell of the to the inner wall of the tube being able to determine the possible axial displacement existing, because the inner wall of the tube is covered with a plastic material permeable to the waves, the plastic material having two layers of the same material adhered together with a Glue having a different dielectric constant.

2. Positioning system for the Hyperloop transportation consisting of a set of radar sensors that map the infrastructure by means of electromagnetic or pressure waves and measure the different distances up to the borders of change to the dielectric metal boundaries according to claim 1 and **characterized in that** the dielectric discontinuity of the two layers of plastic material causes a reflection which the radar uses to measure the thickness of the layer closest to the sheath since in the discontinuity between the interior of the tube and the plastic there is also another discontinuity which provokes another reflection.

3. Positioning system for the Hyperloop transportation consisting of a set of radar sensors that map the infrastructure by means of electromagnetic or pressure waves and measure the different distances up to the boundaries of change up to the dielectric metal boundaries according to the previous claims and **characterized in that** the discontinuity between the interior of the tube and the plastic causes these thicknesses to be staggered along the longitudinal axis of the tube in 2 cm lengths encoding logic levels.
These logical levels would be the following
1, 0 bit, start bit, and end bit and bit repeated by thicknesses of the outer layer (closest to the sheath) of 1,2,3,4 and 5 cm respectively.
The repeated bit, used alternately, allows to identify consecutive sequences of equal logical level.
When the sensor measures this thickness, it associates the logic level with that of the previous bit.

4. Positioning system for the Hyperloop transportation consisting of a set of radar sensors that map the infrastructure by electromagnetic or pressure waves and measure the different distances up to the boundaries of change to the dielectric metal boundaries according to claim 3 and **characterized in that**:
- The bits of information are grouped in 4 in a single piece and as 4 bits per piece are coded, 16 different pieces are obtained.
- The 4 bits of each piece are preceded by a start bit and end with an end bit.
- Plastic pieces (toroids obtained by the revolution of a rectangle) combine to form 32-bit words.
- A seventeenth model of piece of plastic coded in an analogous way identifies the beginning and end of a word
This piece is **characterized in that** its first bit after the start bit is a repeated bit.

5. Positioning system for the Hyperloop transportation consisting of a set of radar sensors that map the infrastructure by electromagnetic or pressure waves and measure the different distances up to the borders of change to the dielectric metal boundaries according to claim 1 and **characterized in that** in addition to longitudinal coding a second angular coding enables the sensors to identify the rotation of the sheath relative to the longitudinal axis because the plastic parts have different angular tracks where each track encodes a different sequence of data.

6. Positioning system for the Hyperloop transportation consisting of a set of radar sensors that map the infrastructure by electromagnetic or pressure waves and measure the different distances up to the boundaries of change up to the dielectric metal boundaries according to claim 5 and **characterized in that** for the angular coding two other sets of thicknesses are used to represent the same logic levels 1,0, Repeat, Start and End, so that a second set encodes the information in the range of thicknesses between 6 and 10 cm And a third set coding in the range of 11 to 15 cm.

7. Positioning system for the Hyperloop transportation consisting of a set of radar sensors interrogating the infrastructure by means of electromagnetic or pressure waves and measuring the different distances up to the boundaries of change to the dielectric metal boundaries according to claims 5 And 6 and **characterized in that** the consecutive angular tracks alternate the set of logical levels as follows
•- The track corresponding to 0 degrees of rotation uses the set of logical levels 1, The track corresponding to 1 degree of rotation uses the set of logical levels 2,
•- The track corresponding to 2 degrees of rotation uses the set of logical levels 3 and
•- The track corresponding to 3 degrees reuses the set 1.

8. Positioning system for the Hyperloop transportation consisting of a set of radar sensors that map the infrastructure by electromagnetic or pressure waves and measure the different distances up to the boundaries of change to the dielectric metal boundaries according to the previous claims And **characterized in that** when the sensor is pointing between two adjacent tracks the sensor is able to read both tracks without the information of one track interfering with the reading of the other.
And where each track, in addition to the 4 bits of longitudinal information, contains another 10 bits that identify the track number, so that each of the 16 different pieces contains a set of tracks where each one encodes 16 bit lengthwise: 1 bit 4 bits of longitudinal feed, 10 bits of track identification and one end bit with the 4 bits of longitudinal information being interleaved between the bits encoding the track number at known positions.
